# EUROPEAN PATENT SPECIFICATION

(11) **EP 2 277 311 B1**
(45) Date of publication and mention of the grant of the patent: **25.02.2015**
(21) Application number: 09751488.9
(22) Date of filing: 20.05.2009
(51) Int. Cl.: H04N 5/76, H04N 21/845

(54) **APPARATUS AND METHOD FOR RECORDING VIDEO DATA**
VORRICHTUNG UND VERFAHREN ZUR AUFZEICHNUNG VON VIDEODATEN
APPAREIL ET PROCÉDÉ D'ENREGISTREMENT DE DONNÉES VIDÉO

(30) Priority: 20.05.2008 US 71836 P; 23.10.2008 US 257232
(43) Date of publication of application: 26.01.2011
(73) Proprietor: Hewlett-Packard Development Company, L.P., Houston, TX 77070 (US)
(72) Inventor: KOWALSKI, Francois-xavier, F-38660 Lumbin (FR); SHEN, Bo, Palo Alto CA 94304-1100 (US); ELLISON, Rich, Andover MA 01810-5897 (US); MICHELET, Jacques, F-38053 Grenoble (FR)
(74) Representative: Hutchinson, Glenn Stanley
(86) International application number: PCT/US2009/044700
(87) International publication number: WO 2009/143260

(56) References cited:
- WO-A2-01/67775
- US-A1- 2002 018 643
- US-A1- 2003 071 971
- US-A1- 2003 219 041
- US-A1- 2008 101 771

## Description

### Background

It is frequently desired to record streaming video data. However, a problem exists in that it is difficult to immediately commence recording of a video stream at an arbitrary point in time.

Generally, a stream of video data periodically comprises stream synchronisation markers, or key frames. A key frame provides an access point to the video stream by providing whole picture information. In other words, a key frame provides picture information without reference to any other video frame. Interposing key frames is a plurality of delta frames. A delta frame contains video data relating to a difference between that video frame and a previous video frame. Thus, a delta frame following a key frame only contains data which differs from that data in the preceding key frame. In order to sufficiently compress a video stream, a key frame is only periodically provided in the video stream every several seconds. Such use of key and delta frames provides compression of the video data, amongst other methods used to create a compressed video stream.

With such compression it is difficult to immediately commence recording of a video data stream at an arbitrary point. If it is desired to commence recording of a video data stream when only delta frame data is received, then only partial picture information will be recorded until a following key frame is received. This will be perceived by a viewer as bad quality recording. Depending upon the frequency of key frame occurrence in the video data stream, the poor quality recording may last for several seconds until receipt of a key frame and, unfortunately, waiting until receipt of the key frame to commence recording may be unacceptable due to the loss of video data prior to receipt of the key frame.

It is an object of embodiments of the invention to at least mitigate one or more of the problems of the prior art.

### Brief Description of the Drawings

Embodiments of the invention will now be described by way of example only, with reference to the accompanying figures, in which:
Figure 1 shows a portion of a stream of video data for use with embodiments of the invention;
Figure 2 shows a block diagram showing a system according to an embodiment of the invention;
Figure 3 shows example processing steps taken by a system according to an embodiment of the invention;
Figure 4 shows a received video data stream and a video data stream recorded using an embodiment of the invention;
Figure 5 shows a received video data stream and a video data stream recorded using an example related to the invention; and
Figure 6 shows a comparison of video data stream, a transmitted video data stream and a video data stream recorded using an embodiment of the invention.

### Detailed Description of Embodiments of the Invention

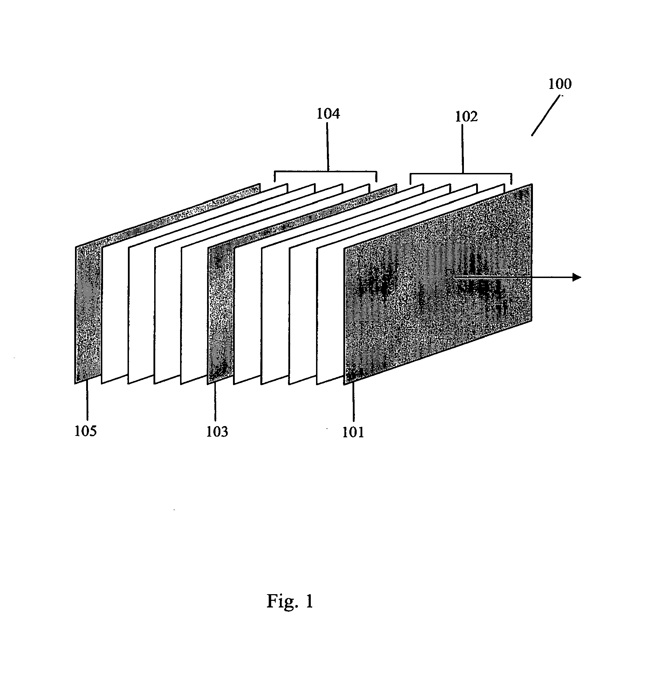

Referring to Figure 1, there is shown a portion of a video data stream 100 for use with embodiments of the present invention. The shown portion of the video stream 100 comprises three key frames 101, 103, 105 interposed by pluralities of delta frames 102, 104. In the shown embodiment of video data stream, each key frame is interposed by 4 delta frames. It will be realised however that in practice the number of delta frames may be considerably larger, with each key frame occurring every several seconds which, at for example 25 frames per second, would lead to key frames being interposed by over 100 delta frames for example. The video data stream is not restricted to the shown number of delta frames interposing key frames, or to the length of the video data stream.

In the received video data stream 100, the key frames 101, 103, 105 each provide complete video data from which an entire video frame may be reproduced without reference to any preceding frame. In other words, an I-frame provides a reconstructed frame of video data. Each of the delta frames forming the pluralities of delta frames 102, 104 requires reference to one or more preceding frames in order to produce a complete, or reconstructed, video frame. For example, decoding key frame 101 generates a reconstructed video frame. In order to generate the next reconstructed video frame, the next following delta frame of the first plurality of delta frames 102 is decoded to provide a difference between with first or preceding reconstructed video frame, generated from key frame 101, and a second reconstructed video frame. The second video frame is reconstructed by utilising the first video frame and the difference information provided by the delta frame. Commonly, key frames 101, 103, 105 are referred to as intra-frames or I-frames whilst delta frames are referred to as predictive coded frames, P-frames, or bi-directional predictive coded frames, B-frames.

Embodiments of the present invention allow recording of a video stream to be commenced by decoding received video frames, determining, when recording is desired to commence, whether a received key frame is available to begin recording and, if not, generating a key frame to begin recording. Recording continues with subsequent frames obtained directly from the received video stream without decoding.

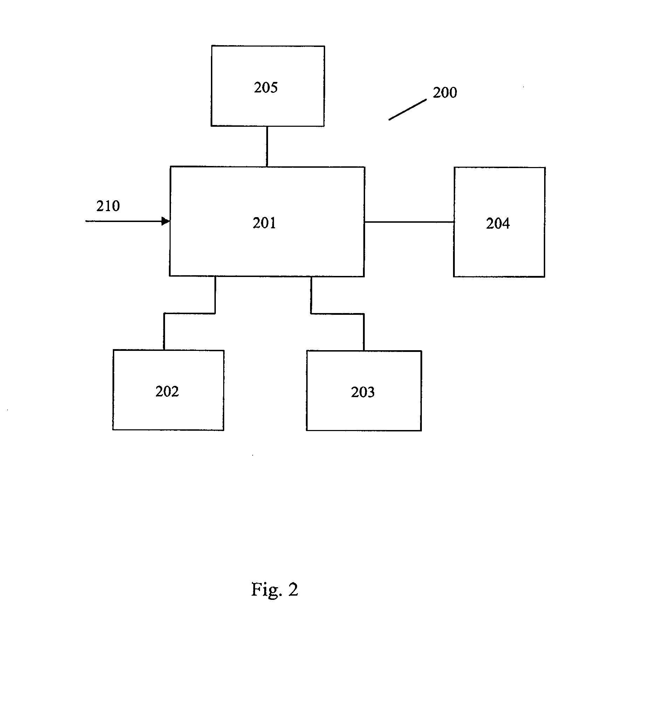

Figure 2 shows an embodiment of the present invention 200 which comprises a control unit 201 for receiving a video data stream 210, a video decoder 202 for decoding video frames forming the video data stream 210, a video encoder 203 for generating encoded video frames, a data storage unit 204 for storing video data and a user interface unit 205 for receiving an input from a user.

The control unit 201 is arranged to receive a video data stream 210. The video stream 210 is formed by I-frames interposed by one or more P or B-frames, as explained above.

In order to record the received video data stream 210 beginning at an arbitrarily desired point, the control unit 201 decodes received video frames forming the video data stream 210 using the decoder 202. The control unit 201 begins to decode frames of the received video data stream 210 as soon as possible, e.g. once a video call is established, by commencing decoding with a first received I-frame, so that complete reconstructed video data is available when an instruction to begin recording is received, as will be explained.

An instruction to begin recording the video data stream is received by the control unit 201. The instruction to begin recording may have originated from a user input applied to the user interface unit 205, a wirelessly received instruction or from expiration of a timer.

Upon receipt of the instruction to begin recording, the control unit 201 is arranged to determine if an I-frame is available from the video data stream 210 to begin recording. An available I-frame may be determined as a most recently received frame, a next received video frame or a video frame received within a predetermined number of frames. For example, it may be acceptable in some circumstances for an I-frame to be received within a small number of video frames, which is less than a number of delta frames, P or B frames, between I frames, whilst still reducing a delay in beginning to record the video data stream 210.

If the control unit 201 determines that an I-frame is unavailable from the video data stream 210, the control unit 201 generates an I-frame using the encoder 203 in order to avoid a delay between recording of the video stream 210 being instructed and recording of the video data stream 210 commencing due to waiting for receipt of an I-frame in the received video data stream 210. The I-frame is generated by the encoder 203 from the reconstructed video data provided by the decoder 202 and therefore may be generated at an arbitrary point in time, without waiting for an I-frame to be received in the video stream 210.

The control unit 201 stores the generated I-frame in the data storage unit 204 to form the start of recorded video data. The data storage unit 204 may be any device suitable for storing video data, such as a semiconductor or solid-state storage device, a magnetic storage device such as a hard disk, or an optical storage device such as an optical disc.

In order to avoid system resources being used by generating encoded video data for recording from decoded video data, the control unit 201 stores further video frames received as part of the video data stream 210 in the data storage unit 204 subsequent to the initially generated I-frame. In most situations, due to the ratio of P-frames and B-frames to I-frames in the received video data stream 210, the control unit 201 can store a next received P-frame in the data storage unit 204 immediately following the generated I-frame. However, as will be explained, in embodiments of the invention, the control unit 201 may control the encoder 203 to generate a subsequent P-frame from video data decoded by the decoder 202 in order to avoid the recorded video data having a high initial bit-rate.

Once generation of the initial I-frame from the decoded video data, and a following p-frame if necessary, have been completed, decoding of the received video data stream is completed. That is, the decoder 202 decodes the received video data stream only to generate the initial key frame, and immediately following delta frame if necessary. Thereafter, decoding of the received video data stream for the purpose of recording video data is stopped. Advantageously, this reduces the use of resources for decoding received video data. Further, encoding of video data is only performed for an initial frame(s) of the recorded video data thus reducing required processing resources. Further advantageously, video encoding requires a higher computational budget than video decoding. In embodiments of the present invention, video encoding is limited to one or a small number of video frames and, in most cases, the encoded frame is an I-frame which generally requires a smaller computational budget than for encoding of a P-frame due to delta-motion estimation-calculation step which is required in P-frame generation but not for I-frame generation.

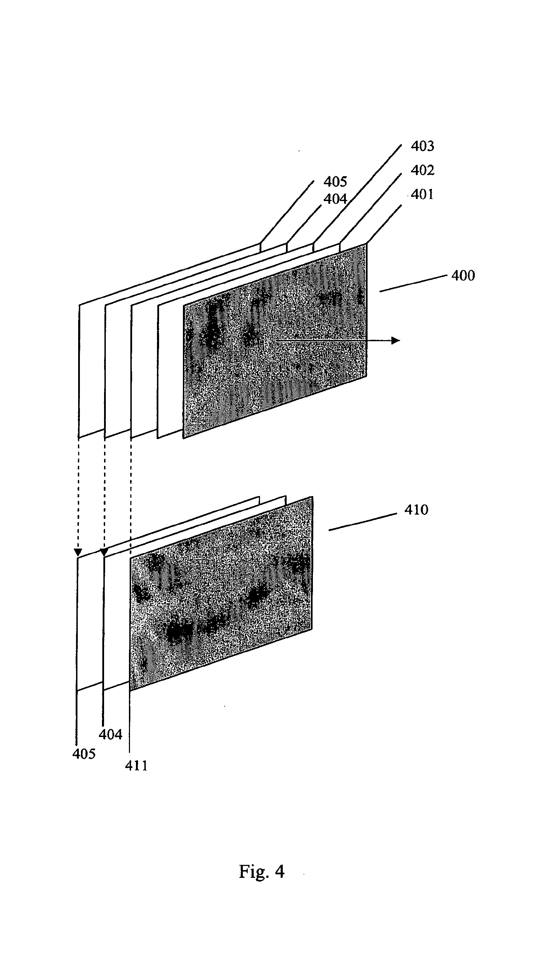

Referring to Figure 4 a comparison of a portion of a received video data stream 400 and recorded video data 410 is shown. The received video data stream 400 comprises an I-frame 401 and subsequent P-frames 402-405. Decoding of the received video stream 400 by decoder 202 commences as soon as the video data stream 400 is received with an initial I-frame 401. If, for example, an instruction to begin recording the received video data stream 400 is received at a time corresponding to P-frame 403, the control unit 201 determines that an I-frame is not available to begin recording from the video data stream 400. The control unit 201 then controls the encoder 203 to generate an I-frame 411 from the decoded video data and the generated I-frame 411 forms an initial frame of the recorded video data 410.

Following generation of the initial I-frame of the recorded video data 410, the control unit 201 then determines whether a next received frame 404 of the received video data 400 is suitable for recording immediately subsequent to the generated I-frame 411 without decoding. In one embodiment, as will be explained, a next received frame is suitable for immediately subsequent recording if it is not a further I-frame. In this case, the decoder 202 ceases to decode the received video data stream 400 and frames 404, 405 of the received video data stream 400 are directly recorded, as shown. In this way, the decoder 202 and encoder 203 operate only to generate an initial I-frame 411 of the recorded data and then subsequent frames of video data are recorded directly from the received video data stream 400.

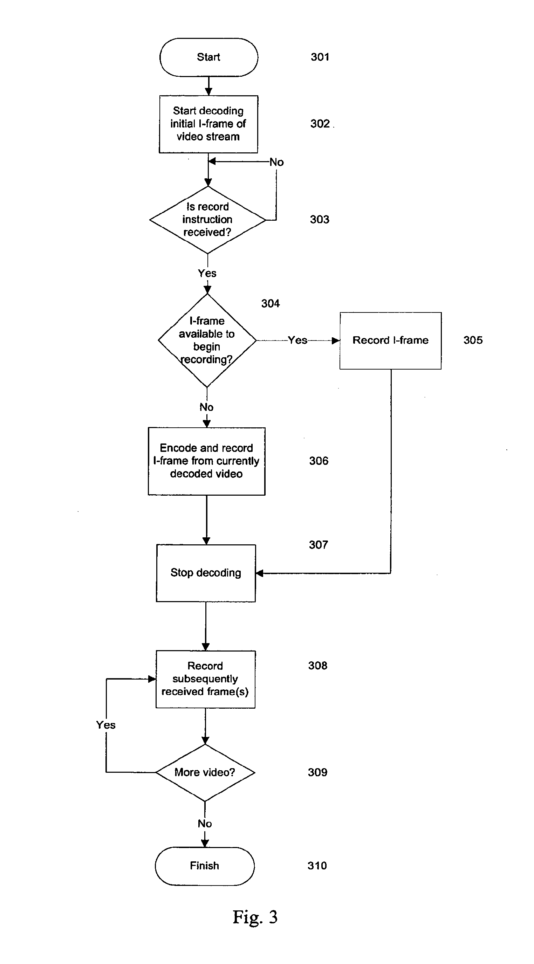

Figure 3 shows a method of an embodiment of the invention. The method is started at step 301 when a first frame of a video data stream is received. The received video data stream is started to be decoded in step 302, also commencing with the first frame. In step 303 it is determined if an instruction to record the received video data stream is received. In step 304, upon receipt of the instruction to begin recording the video data stream, it is determined if a received I-frame of the video stream is available to begin recording. If an I-frame is available, then recording of the video stream begins in step 305 with the available I-frame. If, on the other hand, an I-frame is not available in the received video data stream to begin recording, then an initial I-frame of the recorded video data is generated from the decoded video data and is recorded in step 306. In step 307 decoding of the received video data stream is stopped. In step 306 a received video data frame is directly recorded without having been decoded or encoded. In step 308 it is determined if more received video data frames to be recorded exist. The method ends at step 309 when no more video data is available or an instruction to end recording is received.

It may be realised that, in some instances, an initial I-frame 411 of recorded video data may be generated immediately preceding a received I-frame of video data. In this case, recording of the generated I-frame 411 and the immediately next received I-frame would lead to the recorded video data having an initially high bit-rate due to the presence of adjacent I-frames in the recorded video data 410. An I-frame has a much greater weight, in bytes, than a P-frame or a B-frame. The presence of adjacent 1-frames in the recorded data would therefore lead to an initially high bit rate of the recorded video data.

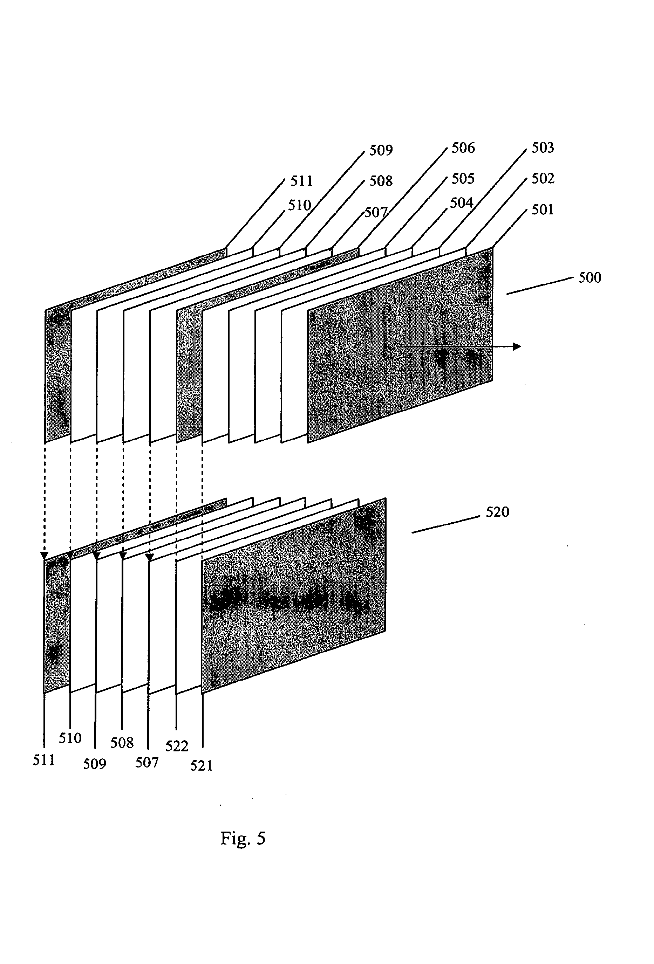

Referring to Figure 5, which shows an example related to the **invention**, a comparison of a portion of a video data stream 500 and recorded video data 520 is shown. The received video data stream 500 comprises 1-frames 501, 506, 511 and P-frames 502-05, 507-510. It is assumed that an instruction to begin recording data is received at a point in time corresponding to receipt of P-frame 505. In this case, the control unit determines that an I-frame is not available to begin recording from the received video data. The encoder 203 is then controlled to generate an initial I-frame 521 of the recorded video data. If the control unit 201 determines that a subsequent frame 506 of the received video data stream 500 is also an I-frame it controls the encoder 203 to generate a P-frame 522 to be recorded subsequent to the initially generated I-frame 521. Thereafter, subsequently received P-frames 507-510 and I-frame 511 are directly recorded without decoding to form the recorded video data 520.

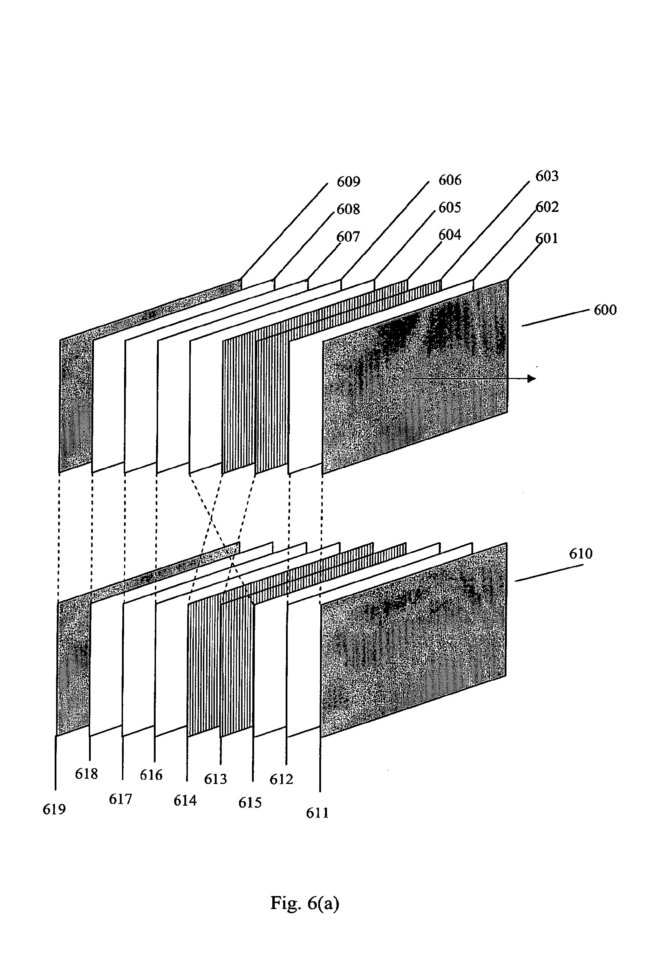

Referring to Figure 6(a), a video data stream 600 formed of I-frames 601, 609, B-frames 603, 604 and P-frames 602, 605, 606, 607, 608 is shown in stream display order 600 and in stream transmission order 610,

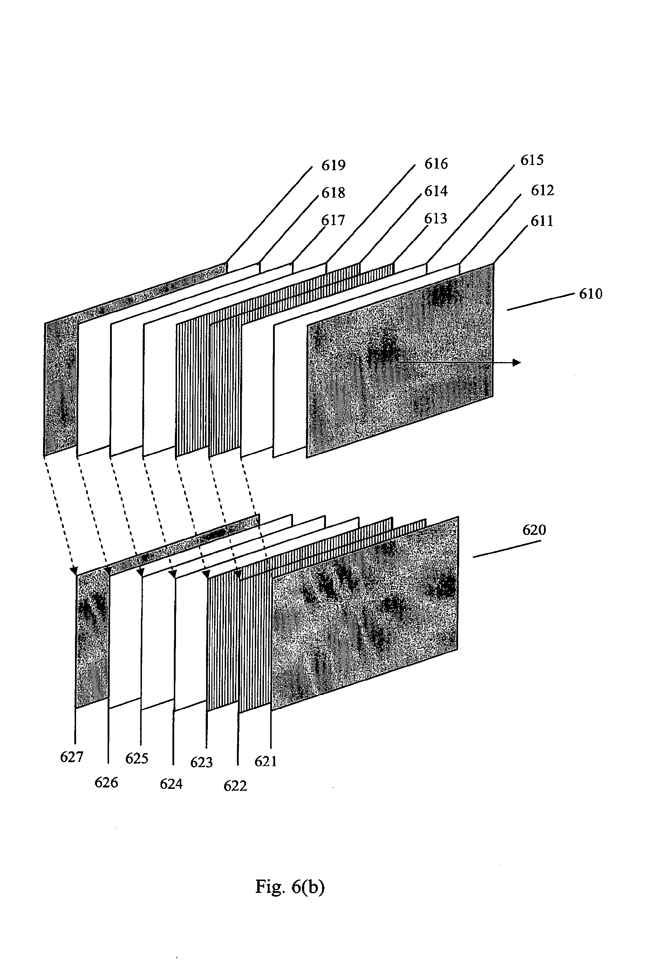

As the skilled reader will appreciate, B-frames are bi-directional predicted frames formed from bi-directional motion prediction and texture information between 1-or P-frames. The video stream 600 is shown in stream display order in which the B-frames 603, 604 interpolate between P-frames 602, 605. In transmission order 610, the P-frames 612, 615 referenced by B-frames 613, 614 are transmitted before the B-frames 613, 614. Thus the transmitted video data stream 610 comprises a further P-frame 615 preceding B-frames 613, 614, as compared to stream display order 600. Referring to Figure 6(b), there is shown a comparison of the transmitted video stream 610 and a recorded video stream 620.

If, for example, an instruction to begin recording video is received at a time corresponding to reception of B-frame 613 in the transmitted video stream 610, the control unit 201 determines that an I-frame is not available from the received video data to immediately begin video recording. However, a reference picture reconstructed from P-frame 615 transmitted ahead of B-frames 613, 614 is already available. Therefore, when the record instruction is received, I-frame 621 is generated based upon already received P-frame 615. Following generation of the initial I-frame 621, B-frames 613, 614 and following frames 616-619 are then recorded directly without decoding as frames 622 - 627.

Embodiments of the present invention may be utilised in any device or apparatus which records streaming video data. An embodiment of the present invention is a portable device capable of wirelessly receiving and recording video data, such as in a video call.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A method of recording a video data stream formed of key frames interposed by a plurality of delta frames, comprising:
decoding received video frames;
determining whether a received key frame is available to form an initial key frame of stored video data and, if not, generating the initial key frame from one or more decoded video frames and storing the initial key frame, and if it is determined that a received key frame is available, storing the received key frame as the initial key frame; and
stopping decoding of subsequent received video frames and storing the subsequent received video frames.

2. The method of claim 1, wherein received video frames are directly stored subsequent to the initial key frame.

3. The method of any of claims 1-2, wherein received video frames are stored adjacent to the initial key frame.

4. The method of any of claims 1-3, wherein the decoding step commences with a first key frame of the video data stream.

5. The method of any of claims 1-4 wherein the initial key frame is generated from a frame transmitted ahead of one or more B-frames, and the one or more B-frames are stored without decoding subsequent to the initial key frame.

6. An apparatus for recording a video data stream formed of key frames interposed by a plurality of delta frames, comprising:
a decoder arranged to decode received video frames;
a control unit; and
a date storage unit, wherein
the control unit is arranged to determine if a received key frame is available to form an initial key frame of stored video data and, if not, to control an encoder to generate the initial key frame from one or more decoded video frames, the data storage unit arranged to store the initial key frame as the initial key frame, and
the control unit is arranged such that if the control unit determines that a received key frame is available, the data storage unit is to store the received key frame as the initial key frame, wherein
the decoder is further arranged to stop decoding of subsequent received video frames and the data storage unit is arranged to store the subsequent received video frames.

7. The apparatus of claim 6, wherein the data storage unit is arranged to directly store received video frames subsequent to the initial key frame.

8. The apparatus of any of claims 6-7, comprising a user interface unit for receiving a user input instructing the start of recording of the video stream.

9. The apparatus of any of claims 6- 8, wherein the control unit is arranged to control the encoder to generate the initial key frame from a video frame transmitted ahead of one or more B-frames, and the data storage unit is arranged to store the B-frames following the initial key frame.

## Patentansprüche

1. Verfahren zum Aufzeichnen eines Videodatenstroms, der aus durch eine Mehrzahl von Delta-Frames eingefügten Schlüsselframes gebildet ist, wobei das Verfahren das Folgende umfassend:
Decodieren empfangener Videoframes;
Bestimmen, ob ein empfangener Schlüsselframe verfügbar ist, um einen anfänglichen Schlüsselframe gespeicherter Videodaten zu bilden, und, wenn nicht, Erzeugen des anfänglichen Schlüsselframes aus einem oder mehreren decodierten Videoframe(s) und Speichern des anfänglichen Schlüsselframes, und wenn bestimmt wird, dass ein empfangener Schlüsselframe verfügbar ist, Speichern des empfangenen Schlüsselframes als anfänglichen Schlüsselframe; und
Anhalten des Decodierens in der Folge empfangener Videoframes und Speichern der in der Folge empfangenen Videoframes.

2. Verfahren nach Anspruch 1, wobei empfangene Videoframes direkt auf den anfänglichen Schlüsselframe folgend gespeichert werden.

3. Verfahren nach einem der Ansprüche 1-2, wobei empfangene Videoframes neben dem anfänglichen Schlüsselframe gespeichert werden.

4. Verfahren nach einem der Ansprüche 1-3, wobei der Schritt des Decodierens mit einem ersten Schlüsselframe des Videodatenstroms beginnt.

5. Verfahren nach einem der Ansprüche 1-4, wobei der anfängliche Schlüsselframe aus einem Frame erzeugt wird, der vor einem oder mehreren B-Frame(s) übertragen wird, und der eine oder die mehreren B-Frame(s) ohne Decodieren auf den anfänglichen Schlüsselframe folgend gespeichert werden.

6. Vorrichtung zum Aufzeichnen eines Videodatenstroms, der aus durch eine Mehrzahl von Delta-Frames eingefügten Schlüsselframes gebildet ist, wobei die Vorrichtung das Folgende umfassend:
einen Decodierer, der zum Decodieren empfangener Videoframes angeordnet ist;
eine Steuereinheit; und
eine Datenspeichereinheit, wobei
die Steuereinheit angeordnet ist, um zu bestimmen, ob ein empfangener Schlüsselframe verfügbar ist, um einen anfänglichen Schlüsselframe gespeicherter Videodaten zu bilden, und, wenn nicht, einen Codierer zu steuern, um den anfänglichen Schlüsselframes aus einem oder mehreren decodierten Videoframe(s) zu erzeugen, wobei die Datenspeichereinheit angeordnet ist, um den anfänglichen Schlüsselframe als anfänglichen Schlüsselframe zu speichern, und
die Steuereinheit derart angeordnet ist, dass, wenn die Steuereinheit bestimmt, dass ein empfangener Schlüsselframe verfügbar ist, die Datenspeichereinheit den empfangenen Schlüsselframe als anfänglichen Schlüsselframe speichern soll, wobei
der Decodierer ferner angeordnet ist, um das Decodieren in der Folge empfangener Videoframes anzuhalten, und die Datenspeichereinheit angeordnet ist, um die in der Folge empfangenen Videoframes zu speichern.

7. Vorrichtung nach Anspruch 6, wobei die Datenspeichereinheit angeordnet ist, um empfangene Videoframes direkt auf den anfänglichen Schlüsselframe folgend zu speichern.

8. Vorrichtung nach einem der Ansprüche 6-7, umfassend eine Benutzerschnittstelleneinheit zum Empfangen einer Benutzereingabe, die den Start des Aufzeichnens des Videostroms angibt.

9. Vorrichtung nach einem der Ansprüche 6-8, wobei die Steuereinheit angeordnet ist, um den Codierer zu steuern, um den anfänglichen Schlüsselframe aus einem Videoframe zu erzeugen, der vor einem oder mehreren B-Frame(s) übertragen wird, und die Datenspeichereinheit angeordnet ist, um die B-Frames auf den anfänglichen Schlüsselframe folgend zu speichern.

## Revendications

1. Procédé d'enregistrement d'un flux de données vidéo formé d'images clés intercalées d'une pluralité d'images delta, comprenant :
décoder des images vidéo reçues ;
déterminer si une image clé reçue est disponible pour former une image clé initiale de données vidéo stockées et, sinon, générer l'image clé initiale à partir d'une ou plusieurs images vidéo décodées et stocker l'image clé initiale et, s'il est déterminé qu'une image clé reçue est disponible, stocker l'image clé reçue en tant que l'image clé initiale ; et
arrêter le décodage d'images vidéo reçues ultérieures et stocker les images vidéo reçues ultérieures.

2. Procédé selon la revendication 1, dans lequel les images vidéo reçues sont directement stockées après l'image clé initiale.

3. Procédé selon l'une quelconque des revendications 1 et 2, dans lequel les images vidéos reçues sont stockées adjacentes à l'image clé initiale.

4. Procédé selon l'une quelconque des revendications 1 à 3, dans lequel l'étape de décodage commence avec une première image clé du flux de données vidéo.

5. Procédé selon l'une quelconque des revendications 1 à 4, dans lequel l'image clé initiale est générée à partir d'une image transmise avant une ou plusieurs trames B, et la ou les trames B sont stockées sans décodage après l'image clé initiale.

6. Appareil pour enregistrer un flux de données vidéo formé d'images clés intercalées d'une pluralité d'images delta, comprenant :
un décodeur conçu pour décoder des images vidéo reçues ;
une unité de commande ; et
une unité de stockage de données,
l'unité de commande étant conçue pour déterminer si une image clé reçue est disponible pour former une image clé initiale de données vidéo stockées et, sinon, pour commander un codeur pour générer l'image clé initiale à partir d'une ou plusieurs images vidéo décodées, l'unité de stockage de données étant conçue pour stocker l'image clé initiale sous forme de l'image clé initiale, et
l'unité de commande étant conçue de telle sorte que, si l'unité de commande détermine qu'une image clé reçue est disponible, l'unité de stockage de données est conçue pour stocker l'image clé reçue en tant que l'image clé initiale,
le décodeur étant en outre conçu pour arrêter le décodage d'images vidéo reçues ultérieures, et l'unité de stockage de données étant conçue pour stocker les images vidéo reçues ultérieures.

7. Appareil selon la revendication 6, dans lequel l'unité de stockage de données est conçue pour stocker directement les images vidéo reçues après l'image clé initiale.

8. Appareil selon l'une quelconque des revendications 6 et 7, comprenant une unité d'interface utilisateur pour recevoir une entrée d'utilisateur donnant l'instruction du début de l'enregistrement du flux vidéo.

9. Appareil selon l'une quelconque des revendications 6 à 8, dans lequel l'unité de commande est conçue pour commander le codeur pour générer l'image clé initiale à partir d'une image vidéo transmise avant une ou plusieurs trames B, et l'unité de stockage de données est conçue pour stocker les trames B après l'image clé initiale.
